# EUROPEAN PATENT SPECIFICATION

(11) **EP 2 690 733 B1**
(45) Date of publication and mention of the grant of the patent: **30.12.2015**
(21) Application number: 12765695.7
(22) Date of filing: 23.03.2012
(51) Int. Cl.: H02G 3/16, B60R 16/023, H02G 3/08

(54) **STORAGE BOX AND ELECTRICAL CONNECTION BOX**
AUFBEWAHRUNGSKASTEN UND ELEKTRISCHER VERBINDUNGSKASTEN
BOÎTIER DE STOCKAGE ET BOÎTIER DE CONNEXION ÉLECTRIQUE

(30) Priority: 25.03.2011 JP 2011068352
(43) Date of publication of application: 29.01.2014
(73) Proprietor: Yazaki Corporation, Minato-ku Tokyo 108-8333 (JP)
(72) Inventor: KAMIGAICHI Shungo, Hiroshima 732-0045 (JP)
(74) Representative: Grünecker Patent- und Rechtsanwälte PartG mbB
(86) International application number: PCT/JP2012/057625
(87) International publication number: WO 2012/133240

(56) References cited:
- JP-A- 10 164 733
- JP-A- 2007 252 112
- JP-A- 2007 336 729
- JP-A- 2009 100 533
- JP-A- 2009 189 193

## Description

### Technical Field

The present invention relates to a storing box and an electrical junction box which are carried in an automobile or the like, and which include a unit storing room to accommodate an electronic control unit. Such a storing box is known from JP2007-252 112 A, which discloses an electrical connection box including an upper outer cover mounted on an electrical connection box body so as to cover the whole upper portion of the electrical connection box body. The electric circuit boards are provided with a plurality of internal connectors, respectively, capable of being electrically connected to a plurality of external connectors. A plurality of connector installment openings are formed by passing through the upper plate of the upper inner cover, respectively, corresponding to the plurality of internal connectors, so that the portions of the plurality of internal connectors with which the plurality of external connectors are engaged are exposed from an upper inner cover. At least one of the plurality of external connectors is onto any of the plurality of internal connectors for electrical connection from the upward of the upper inner cover.

### Background Art

Traditionally, a type of electrical junction box which has a unit storing room that accommodates an electronic control unit including electrical control components is proposed (refer to a patent document 1). The electrical junction box has a unit storing room which accommodates the electronic control unit and a storing room which accommodates a plurality of electric wires (harness) and connectors which are connected to the electronic control unit. The electrical junction box packs up these components compactly and is installed in a vehicle indoor room. When the electronic control unit is to be accommodated in the unit storing room, the electrical junction box in which the electric wires, connectors and the like are arranged in advance is prepared by the electrical manufacturer or the electric wire arranging dealer, and then, the electronic control unit is accommodated in the unit storing room of the electrical junction box by the automobile manufacturer.

### Citation List

### Patent Documents

Patent Document 1: JP-A-2009-100533

### Summary of Invention

### Technical Problem

The traditional electrical junction box has the following problems to be solved. The operation, which is performed by the automobile manufacturer or the like, of connecting the electric wires and the connectors to the electronic control unit, and storing (setting) the electronic control unit in the unit storing room, as described above, is troublesome. That is, when the electric wires which are bundled into one or more bunches are pushed into a accommodating space outside the unit storing room, the electric wires press the side walls that define the unit storing room with a strong force from the outside of the unit storing room. Thus, the side walls of the unit storing room accommodate the pressing force and are bended (deformed) inwards. Therefore, the operation of storing the electronic control unit in the unit storing room becomes difficult or troublesome, and, as a result, the assembling efficiency of the whole electrical junction box worsens.

The present invention is made in view of the above situation, and an object of the invention is to provide a storing box and an electrical junction box so that the side walls of a storing room body which form a unit storing room in which an electronic control unit is accommodated can be reinforced so that even if an external force is accommodated from electric wires or connectors installed outside the storing room body, the side walls will not be bended, and the operation of storing the electronic control unit in the unit storing room can be performed smoothly.

### Solution to Problem

To achieve the previously described object, the storing box according to the present invention is characterized by the following (1).
(1) A storing box, comprising:
   a unit storing room which includes a storing room body defining a space for accommodating an electronic control unit, a accommodating port formed in the storing room body and being an entrance for accommodating the electronic control unit, and a bottom port formed in the storing room body and opens at a position opposing the accommodating port; and
   a first lower member which includes a first lower member body assembled to the storing room body to cover the bottom port, and a reinforcing wall that enters into the storing room body and contacts with an inner surface of the storing room body when the first lower member body is assembled to the storing room body.

To achieve the previously described object, the electrical junction box according to the present invention is characterized by the following (2) and (3).
(2) An electrical junction box comprising the storing box according to the above (1).
(3) The electrical junction box according to the above (2), comprising:
   a frame which forms the storing box; and
   a second lower member which is assembled to the frame to cover one side of the frame where the bottom port is formed, so as to accommodate the first lower member inside thereof.

According to the storing box or the electrical junction box of the constructions of the above (1) to (3), because the reinforcing walls are positioned to contact with the inner surfaces of the storing room body, even if an external force from the outside to the inside is applied on the storing room body (for example, if the storing room body is pressed to a wire harness when the wire harness is accommodated), the reinforcing walls apply a repelling force against the external force on the inner surfaces of the storing room body. Therefore, the storing room body can be prevented from being deformed inwards.

### Advantageous Effects of Invention

According to the present invention, even if electric wires which are installed outside the unit storing room apply an external force onto the unit storing room, because the reinforcing walls produce a repelling force against the external force, the storing room body can be avoided from being bended inwards, and therefore the operation of storing the electronic control unit in the unit storing room can be smoothly and quickly performed without being disturbed by the deformation of the storing room body.

The present invention has been briefly described above. Further, details of the invention will become more apparent after the embodiments of the invention described below are read with reference to the accompanying figures.

### Brief Description of Drawings

Fig. 1 is a perspective view of the electrical junction box (except a second lower member) according to an embodiment of the present invention.
Fig. 2 is an exploded perspective view of the electrical junction box according to the embodiment of the present invention.
Fig. 3 is an exploded perspective view of the electrical junction box shown in Fig. 1 which is seen from a different direction.
Fig. 4 is a front view of a frame of the electrical junction box according to the embodiment of the present invention.
Fig. 5 is a top view of the frame of the electrical junction box according to the embodiment of the present invention.
Fig. 6 is a perspective view of the frame of the electrical junction box according to the embodiment of the present invention which is seen obliquely from below.
Fig. 7 is a front view of a first lower member of the electrical junction box according to the embodiment of the present invention.
Fig. 8 is a top view of the first lower member of the electrical junction box according to the embodiment of the present invention.
Fig. 9 is a perspective view of the first lower member of the electrical junction box according to the embodiment of the present invention.
Fig. 10 is a perspective view of the first lower member shown in Fig. 7 which is seen from a different direction.
Fig. 11 is a front view of the second lower member of the electrical junction box according to the embodiment of the present invention.
Fig. 12 is a top view of the second lower member of the electrical junction box according to the embodiment of the present invention.
Fig. 13 is a front view of an upper cover of the electrical junction box according to the embodiment of the present invention.
Fig. 14 is a bottom view of the upper cover of the electrical junction box according to the embodiment of the present invention.
Fig. 15 is a perspective view of the upper cover of the electrical junction box according to the embodiment of the present invention which is seen obliquely from below.
Fig. 16 is a perspective view which shows that the upper cover is removed from the electrical junction box shown in Fig. 1.
Fig. 17 is a top view of the electrical junction box shown in Fig. 16.
Fig. 18 is a perspective view which partially shows a section of the electrical junction box shown in Fig. 16 which is seen from an XVIII-XVIII line.
Figs. 19A to 19C includes illustrative views which show the process of storing the electronic control unit that is extracted from and inserted into a unit storing room.

### Description of Embodiments

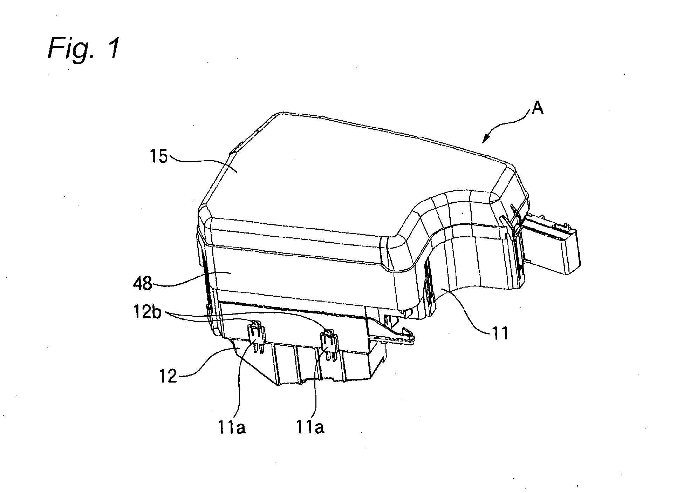

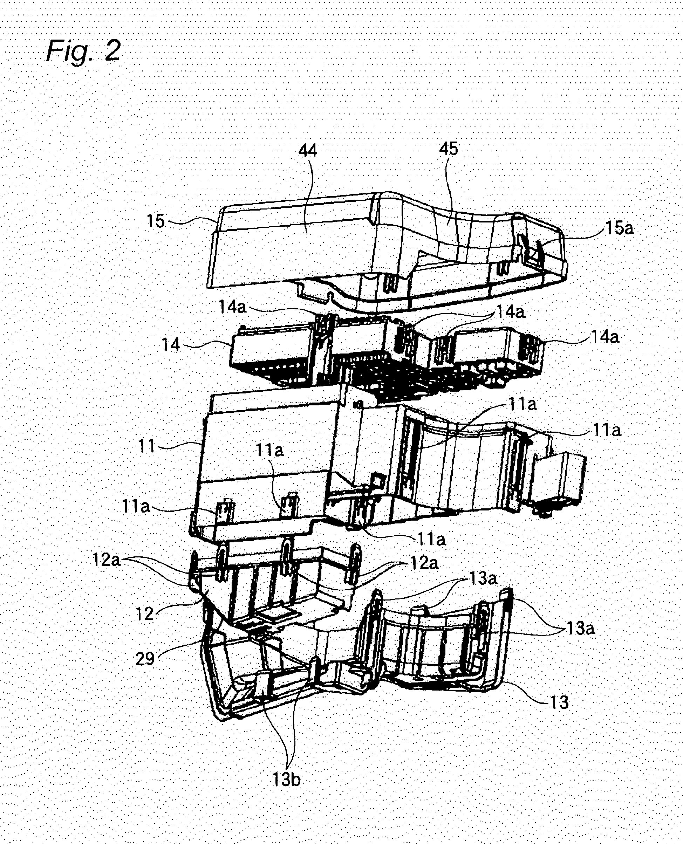

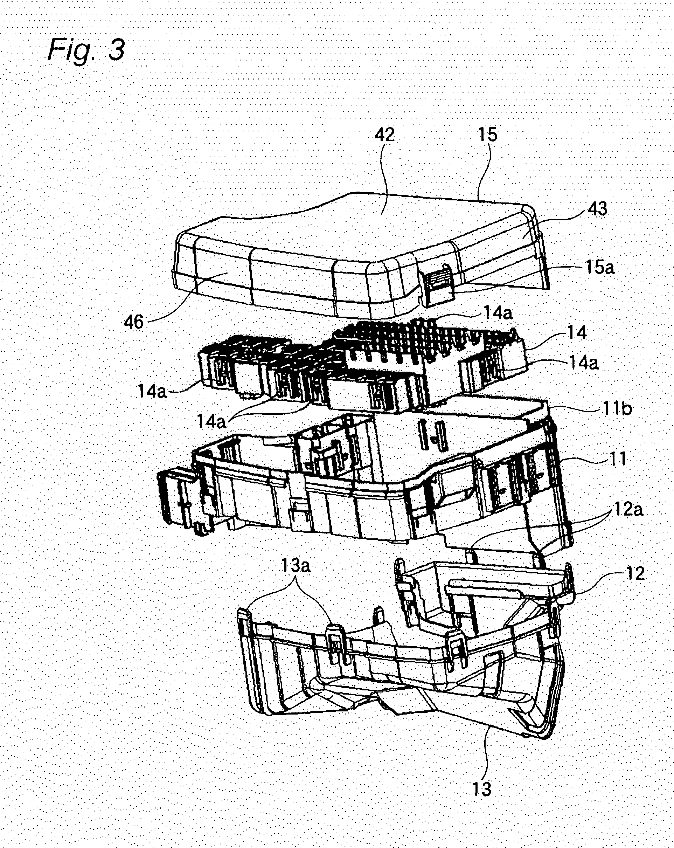

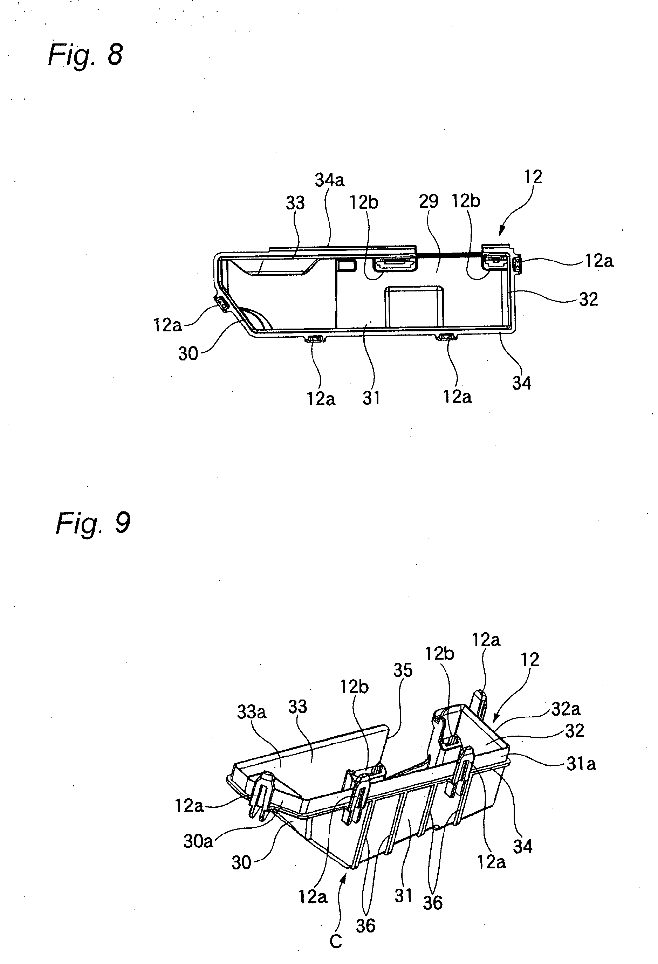

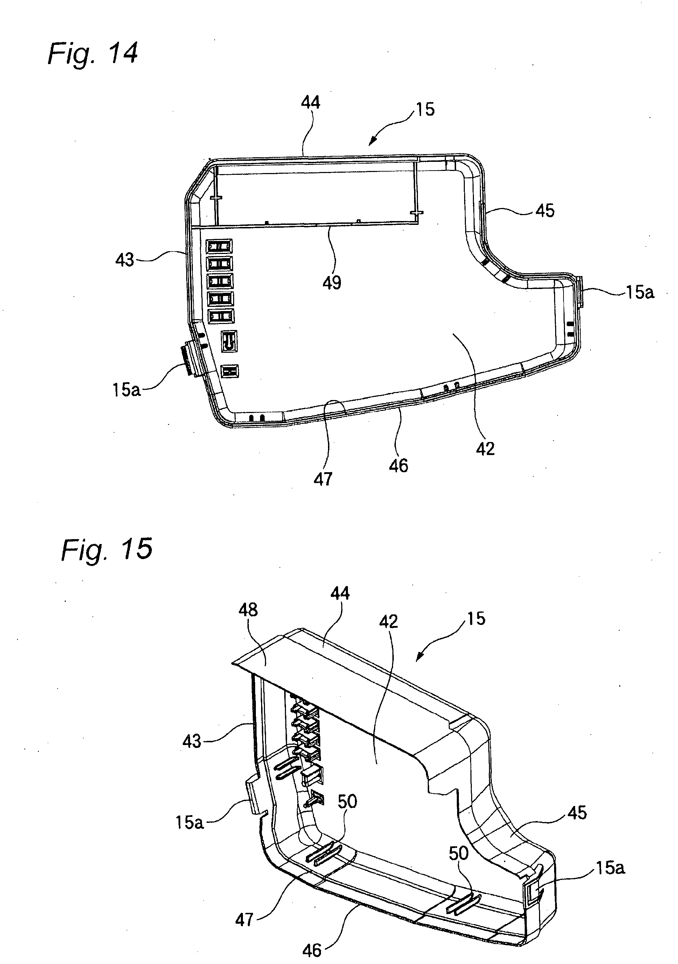

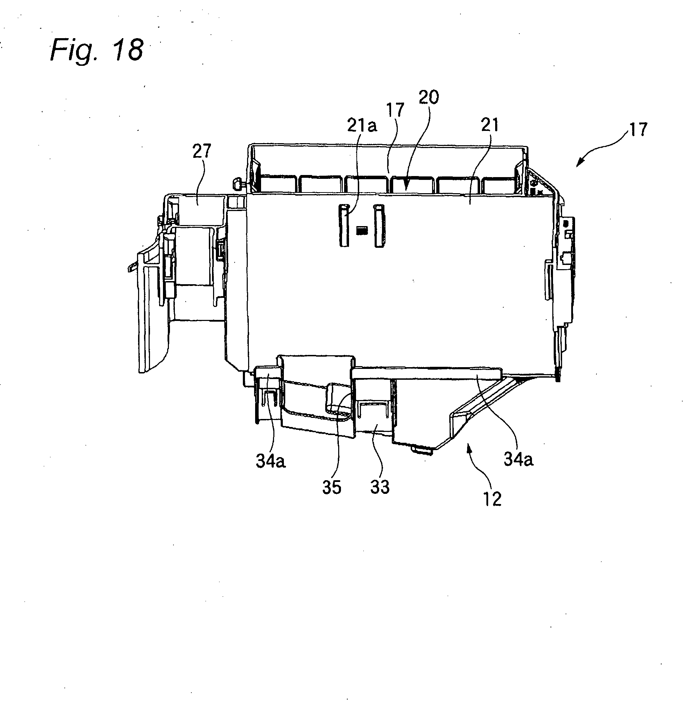

The storing box and the electrical junction box according to one embodiment of the present invention are described as follows with reference to Figs. 1 to 19C. The storing box and the electrical junction box according to the embodiment include a unit storing room which has a storing room body which defines a space in which an electronic control unit is accommodated, a accommodating port which the storing room body is formed with and which becomes an entrance when the electronic control unit is accommodated, and a bottom port which the storing room body is formed with and which opens at a position opposite to the accommodating port, and a first lower member which has a first lower member body which is assembled to the storing room body to cover the bottom port, and reinforcing walls which enter into the storing room body and contact with the inner surfaces of the storing room body when the first lower member body is assembled to the storing room body.

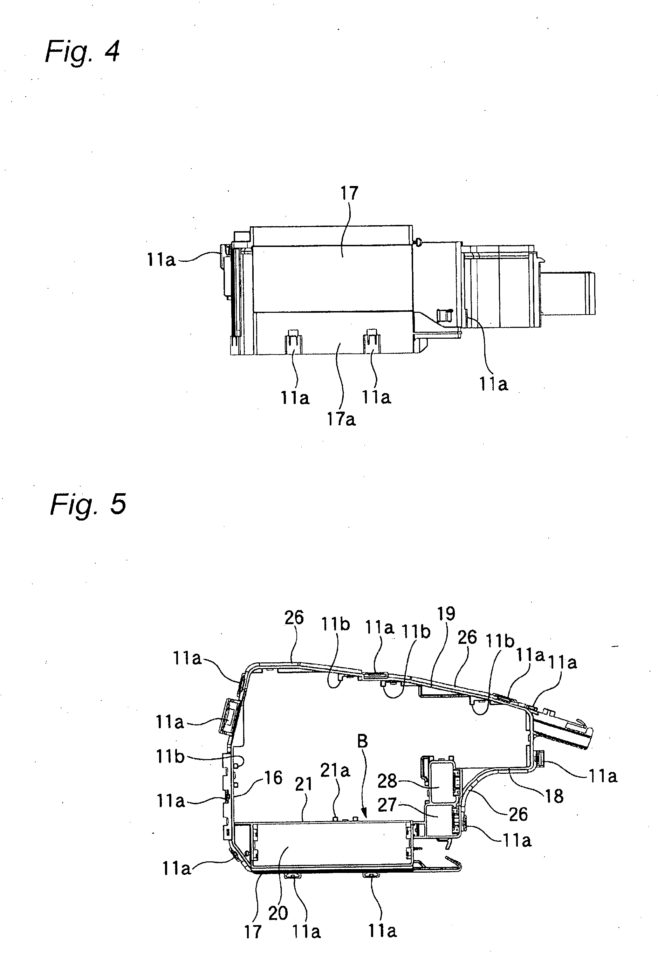

As shown in Figs. 1 to 3, an electrical junction box A of the embodiment includes a frame 11 as a storing box, a first lower member 12, a second lower member 13, a base member 14 and an upper cover 15. The frame (storing box) 11, the first lower member 12, the second lower member 13, the base member 14 and the upper cover 15 are formed into predetermined shapes and sizes by using heat-resistant, insulative and tough material such as synthetic resin or in combination with metal materials. The electrical junction box A is formed when these members are integrally coupled by using coupling means (locking parts or locked parts) to be described below. As shown in Figs. 4 to 6, among these members, the frame 11 is a circular body which is short in the up-down direction as a whole. The frame 11 has side walls 16, 17, 18 and 19, which make up the circular body, and the outer side surfaces of the side walls 16, 17, 18 and 19 are provided integrally with a plurality of locked parts 11a of the same size and shape. Each of the locked parts 11a may vary in size and shape.

The side walls 16 and 19 are curved outwards, the side wall 17 is flat, and the side wall 18 is curved into a substantially L shape as a whole. These side walls 16, 17, 18 and 19 are connected in a circle-shape. As shown in Fig. 4, when the side wall 17 and the opposed side wall 19 are compared in height, the side wall 17 is extended downward to be longer. Between the side wall 17 which includes an extended part 17a which is extended downward and the side wall 19, a separating wall 21 whose section is U-shaped (or whose section is a square) and which defines a unit storing room 20 is adjacently provided to the side wall 17. The separating wall 21 may be made of a metal plate which has a shielding function. A plurality of locking parts 11 b of different sizes and shapes are provided integrally with and protruded from the inner side surfaces of the side walls 16, 18 and 19 which make up the circular body. Each of the locking parts 11 b may have the same size and shape.

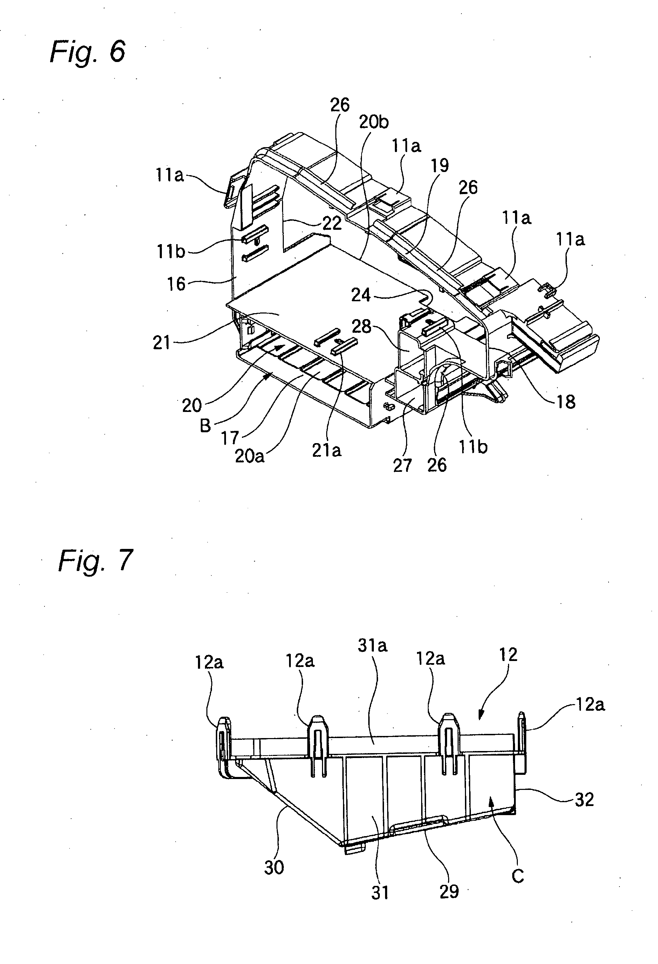

In Figs. 4 and 5, the separating wall 21 and the side wall 17 forms a storing room body B which defines a space in which the electronic control unit 63 to be described is accommodated. The storing room body B defines a space which is penetrated in the up-down direction, and includes a accommodating port 20a as shown in Fig. 6 which becomes the entrance when the electronic control unit 63 is accommodated, and a bottom port 20b which the storing room body B is formed with and which opens at a position opposite to the accommodating port 20a. The accommodating port 20a and the bottom port 20b form a part of the unit storing room 20.

Locking parts 11 b, which the inner side surfaces of the side walls 16 to 19 of the frame 11 are provided with, and a locking part 21a, which the outer side surface of the separating wall 21 is provided with, are locked to locking projections (locked parts) 14a, which the outer side surfaces of the base member 14 are provided with. Thereby, the base member 14 is held in the frame 11. The locked parts 11a, which the outer side surfaces of the side walls 16 to 19 of the frame 11 are provided with, are locked to locking projections 12a and 13a to be described below, which the first lower member 12 and the second lower member 13 are provided with, respectively. Thereby, the first lower member 12 and the second lower member 13 are held to the frame 11.

A cut 22 through which electric wires (harness) to be described below are led in is formed at the lower part of the side wall 16. Furthermore, a cut 24 through which connector-attached electric wires are led into the unit storing room 20 from within the frame 11 is formed at the lower part of the separating wall 21.

Ribs 26, which support the lower edges of the upper cover 15 which blocks the upper opening of the frame 11, are provided integrally with and protruded from the outer side surfaces of the upper part of the side wall 18 and a part of the upper part of the side wall 19. Connector storing frames 27 and 28, in which the connectors connected to electric wires which are stored in the frame 11 are installed, are provided at the inner side of the side wall 18.

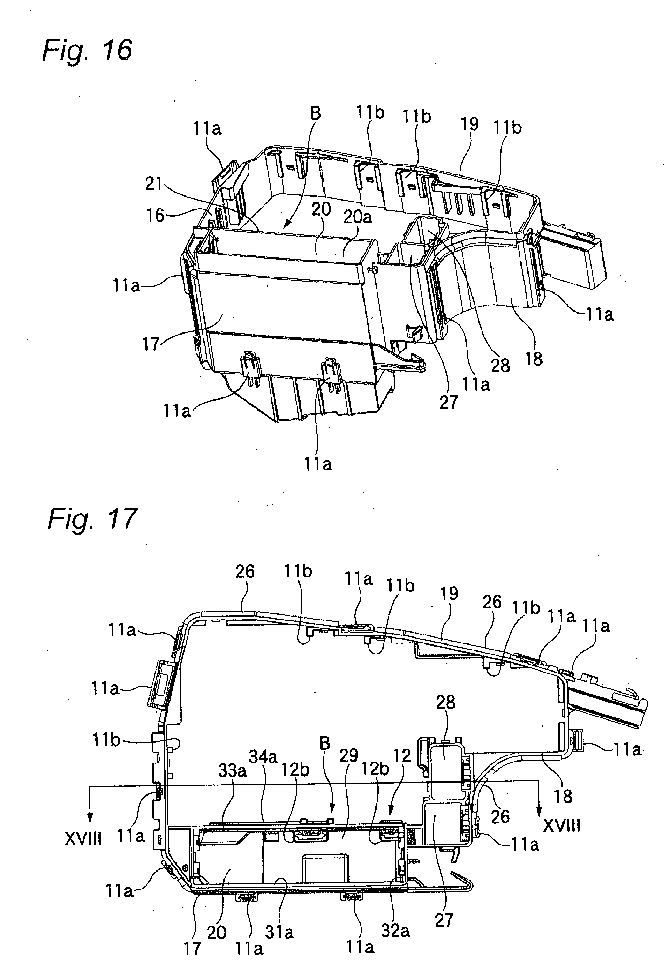

As shown in Figs. 7 to 10, the first lower member 12 is a bottomed container which has such a shape that a bottom part 29 is concaved into a V-shape, and has a first lower member body C which includes a side wall 30, which is curved into a V-shape, that is, which has a part bended, and flat side walls 31 to 33. Reinforcing walls 30a, 31 a, 32a and 33a of roughly the same height are extended upwards from the upper end edges of these side walls 30 to 33 of the first lower member body C, and a rib 34, which is continuous, is provided integrally with and protruded outwards from the upper end edges of these side walls 30 to 33. These reinforcing walls 30a to 33a and the rib 34, together with the first lower member body C, form the above first lower member 12. When the first lower member 12 is assembled to the storing room body B, as shown in Figs. 16 to 18, the reinforcing walls 30a to 33a enter into the storing room body B and contact with the inner surfaces of the storing room body B. Thereby, even if, for example, the storing room body B accommodates a pressing force from electric wires or connectors or the like which are installed outside the storing room body B, a repelling force against the pressing force is applied on the inner surfaces of the storing room body B. Therefore, the storing room body B can be prevented from being deformed inwards.

On the other hand, the rib 34 functions to support the lower ends of the side walls 16 and 17 of the frame 11 whose lower part is attached to the first lower member 12. The locking projections 12a are integrally provided at predetermined positions on the side walls 30 to 32 along the rib 34. The locking projections 12a are provided at sites corresponding to those of the plurality of locked parts 11a on the frame 11. The locked parts 11a and the locking projections 12a are fitted to each other when the frame 11 and the first lower member 12 are coupled. By coupling the frame 11 and the first lower member 12, the first lower member 12 is assembled to the frame 11 so that the bottom port 20b which the storing room body B is formed with is covered from below.

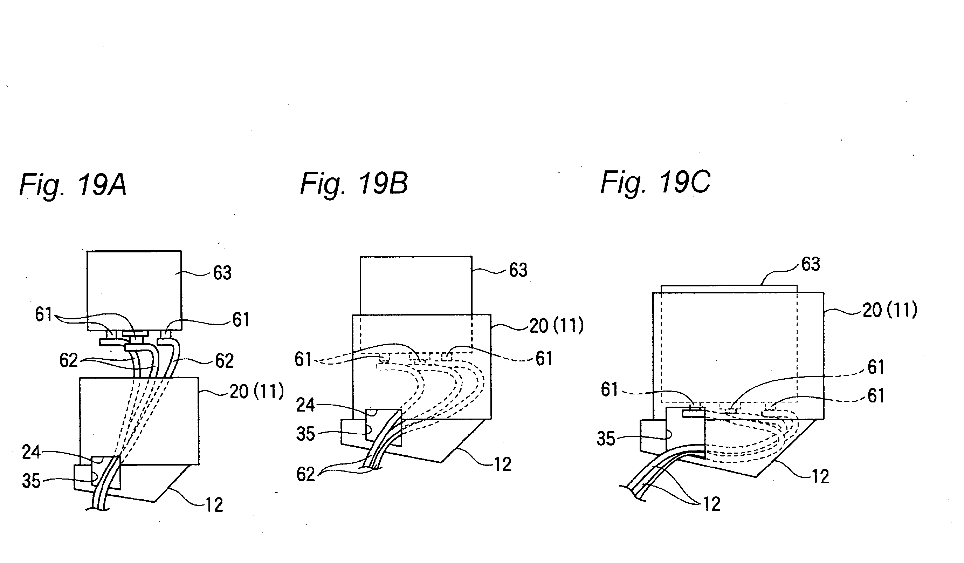

A cut 35 which has a slightly bigger opening is formed at the upper end of the side wall 33, and two (one is big and the other is small) locked parts 12b are provided integrally at the right and left sides of the cut 35. The cut 35 functions to guide the connector-attached electric wires (harness) which are led inside the first lower member 12 through the second lower member 13 which is provided adjacently to the first lower member 12 as shown in Figs. 19A to 19C.

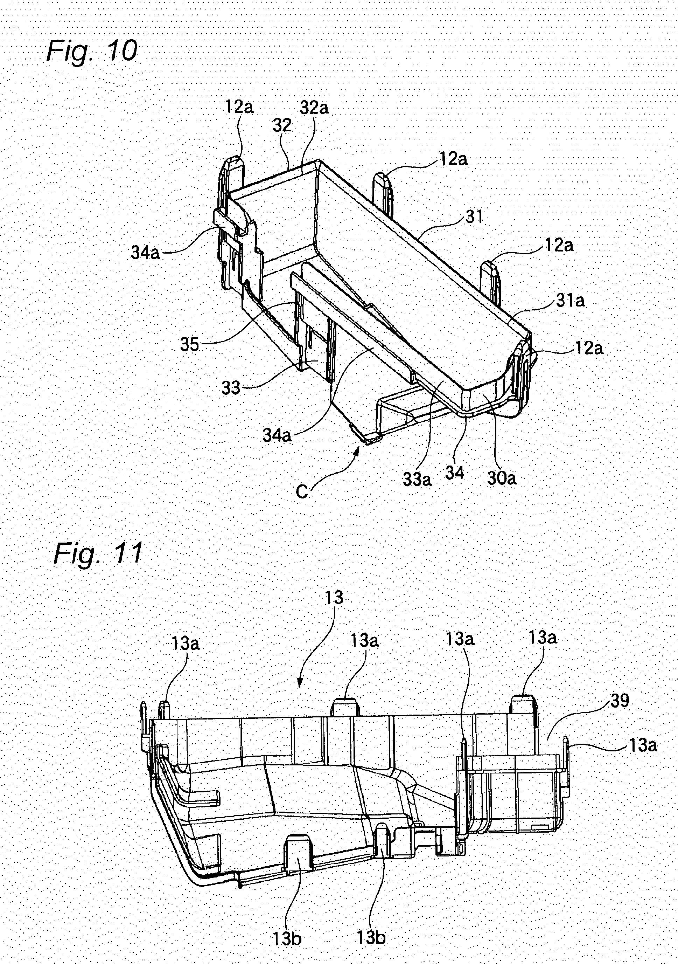

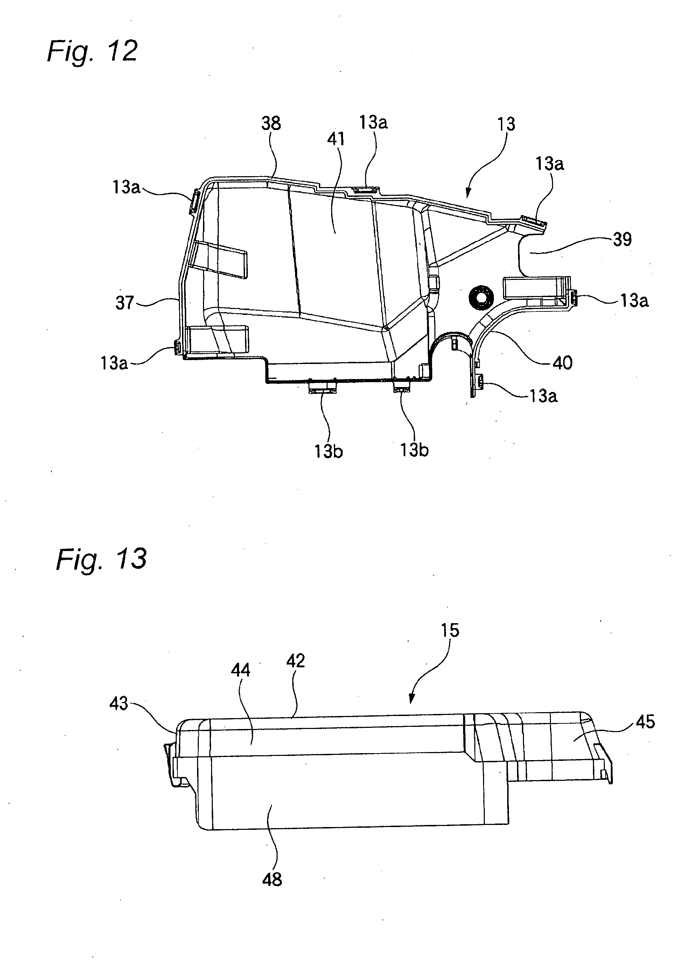

The locked parts 12b are provided at sites corresponding to locking projections 13b which are protruded from the lower part of the lateral open end of the second lower member 13 as shown in Figs. 11 and 12. When the first lower member 12 is connected to the second lower member 13, the locking projections 13b which are protruded from the second lower member 13 are fitted and connected to the locked parts 12b of the first lower member 12, respectively. The reference number 36 show a plurality of reinforcing ribs which are protruded from the outer side surface of the side wall 31 in the vertical direction so that the rib 34 is continued.

Raised pieces 34a are provided adjacently to the upper part of the outer side surface of the side wall 33 in the first lower member 12 to be raised up from the outer side edge of the rib 34. The raised pieces 34a face the reinforcing wall 33a, and are so positioned that the lower end of the separating wall 21 supported on the rib 34 will not be displaced on the rib 34 horizontally. The reinforcing wall 33a, together with the rib 34, reinforces the storing room body B. Therefore, even if the separating wall 21 accommodates a pressing force from the electric wires and the connectors which are installed in the frame 11 adjacent to the separating wall 21 and some external force acts on the side wall 17, the separating wall 21 will not be deformed. Therefore, without reducing the capacity in the unit storing room 20, the operation of storing the electronic control unit 63 in the unit storing room 20 to be described can be performed smoothly without an obstacle.

Thus, in the present embodiment, the lower member is divided in two parts: the first lower member 12 and the second lower member 13. The first lower member 12 communicates with the inside of the unit storing room 20 in the frame 11, and a space, which is shielded from the frame 11 except the unit storing room 20 and the second lower member 13, is formed. Thereby, the inside of the unit storing room 20 is thermally shielded and separated from the outside, and the waterproofness and the strength is improved. As a result, the stability and reliability of the electronic control unit stored in the unit storing room 20 is secured.

When the first lower member 12 is assembled to the storing room body B, as shown in Figs. 16 to 18, the reinforcing walls 30a to 33a enter into the storing room body B and contact with the inner surfaces of the storing room body B. The lower edge of the separating wall 21 in the frame 11 is supported on the rib 34 between the side wall 33 of the first lower member 12 and the raised pieces 34a. Therefore, the separating wall 21 can be stably supported and can be prevented from being deformed in the horizontal direction. Therefore, even if the electric wires and the connectors installed as described above in the frame 11 except the unit storing room 20 apply an external force (pressing force) inwards to the storing room body B, the reinforcing wall 33a will give a repelling force against the external force to the reinforcing wall 21 of the unit storing room 20. As a result, the separating wall 21 will not be bended inwards. Since the reinforcing walls 30a to 32a contact with the inner surfaces at the lower ends of the side walls 16 to 18 of the frame 11, if an external force is applied to these side walls, the reinforcing walls 30a to 32a will give a repelling force against the external force. As a result, the side walls 16 to 18 will not be bended inwards, either.

Figs. 11 and 12 show the second lower member 13 which has the locking projections 13b and locking projections 13a. The second lower member 13 is assembled to the frame 11 so that the first lower member 12 is accommodated inside to cover the side of the frame 11 where the bottom port 20b of the unit storing room 20 is formed. The second lower member 13 is a bottomed container which is opened upwards and in the direction the first lower member 12 is coupled. The second lower member 13 has a side wall 37, a side wall 38, which is substantially L-shaped when viewed from top, an opening 39, an arc-shaped side wall 40 and a bottom part 41. The locking projections 13b may be locked to the locked parts 12b of the first lower member 12 which are arranged adjacently to the locking projections 13b, and the locking projections 13a may be locked to the locked parts 11a on the outer side surfaces of the frame 11. The side walls 37, 38, 40 and the bottom part 41 are reinforced by bending parts at a plurality of positions to each other.

The base member 14 is a board-like block in which electrical components mainly including a large number of connectors, fuses and relays are installed. The base member 14 has a plurality of locked parts 14a which the outer side surfaces of the block is integrally provided with. The base member 14 is made to have such a size and such a shape that the base member 14 may be stored in the frame 11 except the unit storing room 20. The locked parts 14a of the base member 14 may be fitted to the locking parts 11 b at the inner side surfaces of the frame 11. The locked part 14a which is positioned at the front surface of the block may be locked to the locking part 21 a of the separating wall 21.

Figs. 13 to 15 show the upper cover 15. The upper cover 15 is formed to cover the upper opening of the frame 11. The upper cover 15 includes a top part 42 and side walls 43 to 46 which are connected to each other around the top part 42. Among these parts, the top part 42 and the side wall 44 are substantially flatly formed. The side walls 43 to 46 are formed to have shapes and sizes substantially corresponding to those of the side walls 16 to 19 of the frame 11 in a top view. The side wall 45 is substantially L-shaped as a whole in a top view and is connected with the side walls 43, 44, 46 to form a circle.

Parts of the side wall 43 and the side wall 45 are provided with locking projections 15a, one for each side wall, so that the parts of the side walls 43 and 45 are protruded outwards. The locking projections 15a are provided at positions corresponding to the positions of the locked parts 11a, which the side wall 16 and the side wall 18 of the frame 11 are provided with, one for each side wall. Therefore, when the upper part of the frame 11 is covered by the upper cover 15, the locking projections 15a may be engaged with the locked parts 11a.

A step part 47 is continuously formed on the inner side surfaces of the side walls 43 to 46 of the upper cover 15 at positions of the same distance from the top part 42. The upper edges of the side walls 16 to 19 of the frame 11 may be accommodated by the step part 47 at the inner side surfaces of the side walls 43 to 46. That is, the upper cover 15 is installed stably on the frame 11 when the step part 47 is supported by the upper edges of the side walls 16 to 19. An extended wall 48 is extended downward from the lower parts of the side wall 44 and the part of the side wall 45 that is connected to the side wall 44.

Furthermore, a separating wall 49 which is generally U-shaped and which defines a rectangular space with the side wall 44 is provided at the inner side surface of the upper cover 15. The separating wall 49 has a shape and a size, in a top view, that correspond to those of the separating wall 21 which the frame 11 is provided with. When the frame 11 is covered by the upper cover 15, the upper end edge of the separating wall 21 of the frame 11 is closely connected with the lower end edge of the separating wall 49 of the upper cover 15. Therefore, the separating wall 49 forms a space together with the top part 42 to seal the unit storing room 20 of the frame 11 from above. Thus, while the separating wall 49 thermally shields the inside of the unit storing room 20 from the outside, the separating wall 49 is bonded onto the separating wall 21 which forms the unit storing room 20. Thereby, the top part 42 is supported by the separating wall 49. Therefore the top part 42 can be prevented from being unintentionally bended (dented). Numbers 50 show a plurality of reinforcing ribs which the inner surfaces of the side walls 43 to 46 are provided with.

The frame 11, the first lower member 12, the second lower member 13, the base member 14 and the upper cover 15 of such structures are assembled as follows. First, the first lower member 12 is arranged below the frame 11, and the lower end edges of the side walls 16 and 17 and the separating wall 21 of the frame 11 are supported on the rib 34 of the first lower member 12. The locking projections 12a, which the outer side surfaces of the first lower member 12 are provided with, are inserted into the locked parts 11a at the lower part of the frame 11. At this time, the lower edge of the separating wall 21 is on the rib 34 and is located between the raised pieces 34a and the reinforcing wall 33a at the upper part of the side wall 33. Therefore, even if a pressing force is applied onto the separating wall 21 from a large number of electric wires bundled as described later in the frame 11, since the reinforcing wall 33a supports the pressing force, the separating wall 21 will not be deformed. That is, the separating wall 21 is prevented from being bended, and the operation of storing the electronic control unit 63 in the unit storing room 20 can be performed smoothly without an obstacle.

Then, while the opening part side of the second lower member 13 is made to face the side wall 33 side of the first lower member 12, the two (big and small) lock projections 13b at the opening part side are inserted into the locked parts 12b of the first lower member 12 from below. Before or after the engagement of the locking projections 13b with the locked parts 12b, the locking projections 13a at the outer side surfaces of the second lower member 13 are inserted into and locked to the locked parts 11a at the outer side surfaces of the frame 11, which are at opposed positions, from below. Thereby, the frame 11, the first lower member 12 and the second lower member 13 are connected, as shown in Fig. 16.

Then, the base member 14 is inserted into the upper part of the frame 11 from above. At this time, the locking projections (locked parts) 14a, which the outer side surfaces of the base member 14 are provided with, are locked to the locking parts 11 b, which the inner peripheral surfaces of the frame 11 are provided with. Thereby, the base member 14 is stably held at the upper part of the frame 11. The upper cover 15 is put on the frame 11 which accommodates the base member 14. A large number of electric wires which are connected to the relays and fuses installed in the base member 14 are arranged in the frame 11 under the base member 14. At this time, the locking projections 15a of the upper cover 15 are locked to the locked parts 11a at the outer peripheral surfaces of the frame 11 which are at positions corresponding to the lock projections 15a, one for each. Thereby, the upper cover 15 is installed to the frame 11 without a wobble. Finally, the electrical junction box A as shown in Fig. 1 is formed.

In this case, in the unit storing room 20 which is defined by the separating wall 21 in the frame 11, the lower part is blocked since a part of the lower end edges of the side walls 16 and 17 of the frame 11 and the lower end edge of the separating wall 21 are closely connected onto the rib 34 of the first lower member 12. The upper part is blocked since a part of the lower end edges of the side walls 43 and 44 of the upper cover 15 and the lower edge of the separating wall 49 are closely connected to a part of the upper end edges of the side walls of the frame 11 and the upper end edge of the separating wall 21.

Therefore, the inside of the unit storing room 20 becomes a space which is thermally shielded from the inside and outside of the frame 11 except the unit storing room 20, and the thermal transfer between the unit storing room 20, which stores the electronic control unit 63, and the inside of the frame 11, which stores the connector-attached electric wires which are connected to the electronic control unit 63, is regulated.

In the electrical junction box A, the electric wires together with the base member 14 are stored in the frame 11 except the unit storing room 20. Ends of the electric wires and the connectors which are attached to the ends are inserted into the unit storing room 20 through the cut 35 of the first lower member 12 and the cut 24 which the separating wall 21 in the frame 11 is provided with. The connectors which are stored in the unit storing room 20 are lifted from the upper opening of the unit storing room 20, and are fitted to the terminals of the electronic control unit prepared by the automobile manufacturer. Then, the electronic control unit 63 is accommodated in the unit storing room 20.

The steps to store an electronic control unit 63 prepared by the automobile manufacturer in the unit storing room 20 of the frame 11 of the electrical junction box A are shown in Figs. 19A to 19C. First, as shown in Fig. 19A, electric wires (harness) 62 attached with connectors 61 which are inserted inside the unit storing room 20 through the cut 24 and the cut 35 are lifted by fingers or a jig inserted from the side of the upper opening part of the unit storing room 20, and are installed (fitted) to the terminals (not shown in the figure) of the prepared electronic control unit 63.

Then, as shown in Fig. 19B, after the connectors 61 and the terminals at the side of the electronic control unit 63 are fitted surely, while the electric wires 62 are bended to a generally U shape in the first lower member 12 and the unit storing room 20, the electronic control unit 63 is pushed into the unit storing room 20. The pushing operation is performed until the top surface of the electronic control unit 63 is sunk near the opening part of the unit storing room 20. Then, the upper cover 15 is put on the frame 11 from above the large number of electric wires, which are arranged inside the frame 11 except the unit storing room 20, and the base member 14, which is arranged above the electric wires as described above.

In the present embodiment, the lower member is divided in two parts: the first lower member 12 and the second lower member 13, and the first lower member 12 communicates with the inside of the unit storing room 20 in the frame 11, and a space, which is shielded from the frame 11 except the unit storing room 20 and the second lower member 13, is formed. Thereby, the inside of the unit storing room 20 can be thermally shielded and separated from the outside, and the waterproofness can be improved. As a result, the stability and reliability of the electronic control unit stored in the unit storing room 20 is secured. When the first lower member 12 is installed to the frame 11, the lower edge of the separating wall 21 in the frame 11 is supported on the rib 34 between the reinforcing walls 30a to 33a on the side wall 33 of the first lower member 12 and the raised pieces 34a. Therefore, there are merits that the separating wall 21 can be stably supported and can be regulated from being deformed or moved in the horizontal direction.

As described above, the storing box of the present embodiment includes the unit storing room 20 which has the storing room body B which defines a space in which the electronic control unit 63 is accommodated, a accommodating port 20a which the storing room body B is formed with and which becomes an entrance when the electronic control unit 63 is accommodated, and a bottom port 20b which the storing room body B is formed with and which opens at a position opposing the accommodating port 20b, and the first lower member which has the first lower member body C which is assembled to the storing room body B to cover the bottom port 20b, and the reinforcing walls 30a to 33a which enter into the storing room body B and contact with the inner surfaces of the storing room body B when the first lower member body C is assembled to the storing room body B.

Thereby, since the reinforcing walls 30a to 33a are positioned to contact with the inner surfaces of the storing room body B, even if an external force from the outside to the inside is applied to the storing room body B, the reinforcing walls 30a to 33a apply a repelling force against the external force on the inner surfaces of the storing room body B. Therefore, the storing room body B can be prevented from being bended inwards, and the operation of storing the electronic control unit in the unit storing room can be performed smoothly without hindrance.

Although the invention is described in detail with reference to specific embodiments, it is apparent that various modifications and amendments may be made by those skilled in the art without departing from the spirit and scope of the invention.

This application is based on the Japanese patent application (patent application 2011-068352) filed on March 25th, 2011.

### Industrial Applicability

The present invention is useful in the fields of a storing box and an electrical junction box which are carried in an automobile or the like and include a unit storing room to accommodate an electronic control unit.

### Reference Signs List

- A: electrical junction box
- B: storing room body
- C: first lower member body
- 11: frame (storing bin)
- 11a: locked part
- 11b: locking part
- 12: first lower member
- 12a: locking projection
- 12b: locked part
- 13: second lower member
- 13a: locking projection
- 13b: locking projection
- 14: base member
- 14a: locking projection (locked part)
- 15: upper cover
- 15a: locking projection
- 16, 17, 18, 19: side wall
- 20: unit storing room
- 20a: accommodating port
- 20b: bottom port
- 21: separating wall
- 21a: locking part
- 22: cut
- 24: cut
- 26: rib
- 27, 28: connector storing frame
- 29: bottom part
- 30, 31, 32, 33: side wall
- 30a, 31a, 32a, 33a: reinforcing wall
- 34: rib
- 35: cut
- 36: reinforcing rib
- 37, 38, 40: side wall
- 39: opening
- 41: bottom part
- 42: top part
- 43, 44, 45, 46: side wall
- 47: step part
- 48: extended wall
- 49: separating wall
- 50: reinforcing rib
- 61: connector
- 62: electric wires (harness)
- 63: electronic control unit

## Claims

1. A storing box, comprising:
a unit storing room (20) which includes a storing room body (B) defining a space for accommodating an electronic control unit (63), anaccommodating port (20a) formed in the storing room body (B) and being an entrance for accommodating the electronic control unit (63), and a bottom port (20b) formed in the storing room body (B) and opening at a position opposing the accommodating port (20a); and
a first lower member (12) which includes a first lower member body (C) assembled to the storing room body (B) to cover the bottom port (20b), and a reinforcing wall (30a - 33a) that enters into the storing room body (B) and contacts with an inner surface of the storing room body (B) when the first lower member body (C) is assembled to the storing room body (B).

2. An electrical junction box (A) comprising the storing box according to claim 1.

3. The electrical junction box (A) according to claim 2, comprising:
a frame (11) which forms the storing box; and
a second lower member (13) which is assembled to the frame (11) to cover one side of the frame where the bottom port (20b) is formed, so as to accommodate the first lower member (12) inside thereof.

## Patentansprüche

1. Aufbewahrungskasten, umfassend:
einen Einheiten-Aufbewahrungsraum (20), der einen Aufbewahrungsraumkörper (B) umfasst, der einen Zwischenraum für die Aufnahme einer elektronischen Steuereinheit (63) bildet, einen Aufnahmeanschluss (20a), der in dem Aufbewahrungsraumkörper (B) ausgebildet ist und ein Eingang für die Aufnahme der elektronischen Steuereinheit (63) ist, und einen Bodenanschluss (20b), der in dem Aufbewahrungsraumkörper (B) ausgebildet ist und sich an einer Position öffnet, die dem Aufnahmeanschluss (20a) gegenüberliegt; und
ein erstes unteres Element (12), das einen ersten unteren Elementkörper (C) umfasst, der an dem Aufbewahrungsraumkörper (B) angebracht ist, um den Bodenanschluss (20b) zu bedecken, und eine Verstärkungswand (30a - 33a), die in den Aufbewahrungsraumkörper (B) eintritt und eine Innenoberfläche des Aufbewahrungsraumkörpers (B) berührt, wenn der erste untere Elementkörper (C) an dem Aufbewahrungsraumkörper (B) angebracht wird.

2. Elektrischer Verbindungskasten (A), umfassend den Aufbewahrungskasten nach Anspruch 1.

3. Elektrischer Verbindungskasten (A) nach Anspruch 2, umfassend:
einen Rahmen (11), der den Aufbewahrungskasten bildet; und
ein zweites unteres Element (13), das an dem Rahmen (1) angebracht ist, um eine Seite des Rahmens abzudecken, wo der untere Anschluss (20b) ausgebildet ist, um so das erste untere Element (12) im inneren desselben aufzunehmen.

## Revendications

1. Boîtier de stockage comprenant :
un compartiment de stockage d'unité (20) incluant un corps de compartiment de stockage (B) définissant un espace pour recevoir une unité de commande électronique (63), un accès de réception (20a) formé dans le corps de compartiment de stockage (B) et constituant l'entrée pour recevoir l'unité de commande électronique (63), et une partie de fond (20b) formée dans le corps de compartiment de stockage (B) et s'ouvrant dans une position opposée à l'accès de réception (20a) ; et
un premier élément inférieur (12) incluant un premier corps d'élément inférieur (C) assemblé sur le corps de compartiment de stockage (B) pour recouvrir l'accès inférieur (20b) et une paroi de renfort (30a à 33a) qui pénètre dans le corps de compartiment de stockage (B) et est en contact avec la surface intérieure du corps de compartiment de stockage (B) lorsque le premier corps d'élément inférieur (C) est assemblé sur le corps de compartiment de stockage (B).

2. Boîtier de connexion électrique (A) comprenant la boîte de stockage selon la revendication 1.

3. Boîtier de connexion électrique (A) selon la revendication 2, comprenant :
une structure (11) qui constitue la boîte de stockage ; et
un second élément inférieur (13) qui est assemblé sur la structure (11) pour recouvrir un côté du cadre lorsque l'accès inférieur (20b) est formé, de façon à recevoir le premier élément inférieur (12) à l'intérieur de celui-ci.
